# EUROPEAN PATENT SPECIFICATION

(11) **EP 3 869 174 B1**
(45) Date of publication and mention of the grant of the patent: **06.11.2024**
(21) Application number: 21157791.1
(22) Date of filing: 18.02.2021
(51) Int. Cl.: G01M 1/36, H02N 2/10

(54) **BALANCING DEVICE FOR ROTATING PARTS**
AUSWUCHTGERÄT FÜR ROTIERENDE TEILE
DISPOSITIF D'EQUILIBRAGE POUR PIECES EN ROTATION

(30) Priority: 20.02.2020 IT 202000003524
(43) Date of publication of application: 25.08.2021
(73) Proprietor: Balance Systems S.r.L., 20145 Milano (IT)
(72) Inventor: TRIONFETTI, Gianni, 20041 Agrate Brianza (Monza Brianza) (IT)
(74) Representative: Lunati & Mazzoni S.r.L.

(56) References cited:
- WO-A1-2009/037693
- US-A- 5 688 160
- MATTHIAS HUNSTIG: "Piezoelectric Inertia Motors-A Critical Review of History, Concepts, Design, Applications, and Perspectives", ACTUATORS, vol. 6, no. 1, 6 February 2017 (2017-02-06), pages 7, XP055739465, DOI: 10.3390/act6010007

## Description

### BALANCING DEVICE FOR ROTATING PARTS

The present invention relates to a balancing device for rotating parts of the type specified in the preamble of the first claim.

Various types of balancing devices for rotating parts are currently known.

In particular, onboard of rotating devices, such as machine tools or other machinery, there are balancing devices capable of constantly maintaining the center of mass of the rotating portion in the selected position. Generally, the said center of mass of the rotating portion is kept in correspondence with the rotation axis, so that unwanted centrifugal forces are not created.

Said balancing devices are generally inserted in balancing apparatuses which also comprise imbalance measuring means, suitable for verifying and measuring the presence of an imbalance.

The imbalance is consequently regulated and canceled, or reduced to the maximum, by the said balancing device, constrained to the rotating portion.

The latter comprises two non-balanced masses, with respect to the rotation axis of the rotating piece, and therefore each comprising an appropriately identical imbalance, or rather of the same mass. The balancing device also comprises two motors, one for each mass, adapted to rotate said masses around the rotation axis itself.

The position of the non-balanced masses affects the center of mass of the rotating portion.

In fact, if the same masses are opposite, offset at 180 ° with respect to the rotation axis, their imbalances cancel each other out and the balancing device does not change the position of the center of mass of the assembly consisting of the rotating portion and the balancing device.

On the contrary, if the masses are not opposite, their imbalances do not cancel each other out and the balancing device generates an imbalance. Said imbalance at the same time is suitably made equal to and opposite to the unbalance of the rotating portion, so that the position of the center of mass of the assembly consisting of the rotating portion and the balancing device is modified and is positioned along the rotation axis or as close to it as possible.

The said masses are generally moved, with respect to the rotating piece and to modify the portion of the center of mass, by means of electric motors and mechanical connections. As described for example in patent application EP-A-2717032 by the same applicant or in patent US-B-5688160.

Patent application US-A-17886005, on the other hand, shows masses moved directly from the fixed portion.

Patent application EP-A-19158944, by the same applicant, shows balancing masses moved by motors inside the masses themselves.

Patent application EP-A-13156332, by the same applicant, shows moving balancing masses consisting of wires or tapes that can be wound around bobbins placed in eccentric positions with respect to the rotation axis, so that the winding and unwinding around a different bobbins result in a transfer of mass and a change in the center of mass of the balancing device.

The known technique described includes some drawbacks.

In particular, said devices are very complex and therefore could be subject to problems if not constantly revised.

They are also very subject to wear.

A further drawback is that it is not possible to miniaturize very complex systems.

The complexity and the problems are further accentuated by the considerable forces at play. In fact, said rotating pieces can reach speeds of the order of magnitude of tens of thousands of revolutions per minute.

In this situation, the technical task underlying the present invention is to devise a balancing device capable of substantially obviating at least part of the aforementioned drawbacks.

Within the scope of said technical task, it is an important object of the invention to obtain a balancing device which is simple and robust.

Another important object of the invention is to provide a balancing device which is precise.

Not least object of the invention is to provide an inexpensive balancing device.

The technical task and the specified aims are achieved by a balancing device as claimed in the annexed claim 1.

Preferred technical solutions are highlighted in the dependent claims.

The characteristics and advantages of the invention are clarified below by the detailed description of preferred embodiments of the invention, with reference to the accompanying drawings, in which:
the **Fig. 1** shows the balancing device according to the invention in an exploded view in axonometry; and

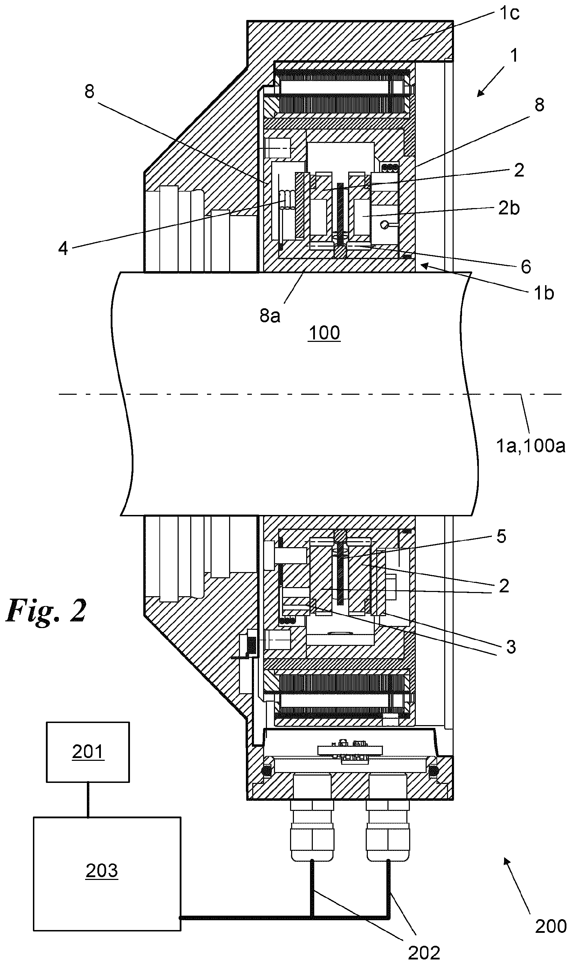

the **Fig. 2** shows a section of the device according to the invention,
the **Fig. 3** illustrates a portion of the device according to the invention, and
the **Fig. 4** illustrates an operating chart of the device according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the balancing device according to the invention is globally indicated with the number **1.**

It is conveniently part of a balancing apparatus **200,** described below.

The balancing device 1 defines a central axis **1a** and, in use, is connected to a rotating piece **100.**

Said rotating piece 100 is preferably constituted by the rotor of a machine tool or by other devices and defines a rotation axis **100a.**

The balancing device 1 is connectable to the rotating piece 100, so that the central axis 1a substantially coincides with the rotation axis 100a. It has the purpose of eliminating the imbalances of the system comprising the balancing device 1 itself and the rotating piece 100. These imbalances are eliminated when the center of mass of the balancing device 1 system and the rotating piece 100 lies along the rotation axis 100a.

The balancing device 1 comprises at least one eccentric mass **2,** and more preferably two eccentric masses 2, each independently rotatable about the central axis 1a and not balanced with respect to the same central axis 1a.

The eccentric masses 2 are for example constituted by two annular elements, with axis along the central axis 1a, having asymmetrically discharged portions **2a** or similar.

The balancing device 1 also comprises at least one balancing motor **3** preferably one for each mass 2, more preferably two motors 3, each able to rotate an eccentric mass 2, with respect to the rotating part 100 around the central axis 1a. The motor 3 is also capable of rotating the eccentric mass 2 with respect to the remaining part of the balancing device 1.

Le eccentric masses 2 are preferably mutually opposed and/or mutually connected by second rotational bearings **6** around the central axis 1a, so that said masses 2 can rotate mutually freely and substantially without friction.

The motor 3 is of the stick-slip type.

As known, a motor of the piezoelectric type uses motor means constituted by piezoelectric elements, such as crystals or ceramics known per se. Said piezoelectric elements are deformed, generally expanded or contracted, or elongated or restricted, following an electrical stimulus or an electrical voltage. The stick-slip motors, on the other hand, are motors that exploit the phenomenon called stick-slip for handling. The stick-slip is a known mechanical phenomenon that involves the friction between two mutually connected surfaces. In such motors, for example in a first direction, one surface is moved very quickly with respect to another, so that the inertia force exceeds that of friction and slippage is obtained. On the contrary, in the opposite direction, the same moving surface can move more slowly, with reduced accelerations, so as not to overcome the static friction between the two portions and drag the second surface in this second movement. To obtain the inversion of the motion it is sufficient to invert the law of command. That is, by first applying the slow movement which drags the rotating mass 2 and then the rapid movement where the return action of the spring, suitably sized, causes the slippage. The balancing device 1 preferably comprises a rotor portion **1b,** in use integral with the rotating piece 100, and not movable with respect to it. With respect to the fixed portion 1b, the eccentric masses 2 can be moved by the motors 3. The balancing device 1 preferably comprises a stator portion **1c,** preferably connected to the balancing apparatus 200 and integral with a support and preferably with the ground. The stator portion 1c preferably faces radially, or axially, to the rotor portion 1b.

Each eccentric mass 2 is therefore preferably constrained to the rotor portion 1b by means of first rotational bearings **5,** around the central axis 1a, so as to be able to rotate freely, and as commanded, with respect to the same central axis 1a.

Furthermore, each balancing motor 3 comprises at least one active portion **30,** movable with respect to the rotor portion 1b and connected to the fixed portion 1b by means of at least one thrust element **31,** preferably piezoelectric. The thrust element 31 is therefore able to move, by means of its own active deformation following electrical pulses, at least part of the active portion 30 in a circumferential direction with respect to the central axis 1a.

More in detail, the active portion 30 is connected to the fixed portion 1a by means of elastic return means **32,** capable of bringing, in the absence of other external stimuli, the active portion 30 to an initial position following movement by said thrust element 31. The elastic return means are preferably leaf springs or the like or magnetic elements.

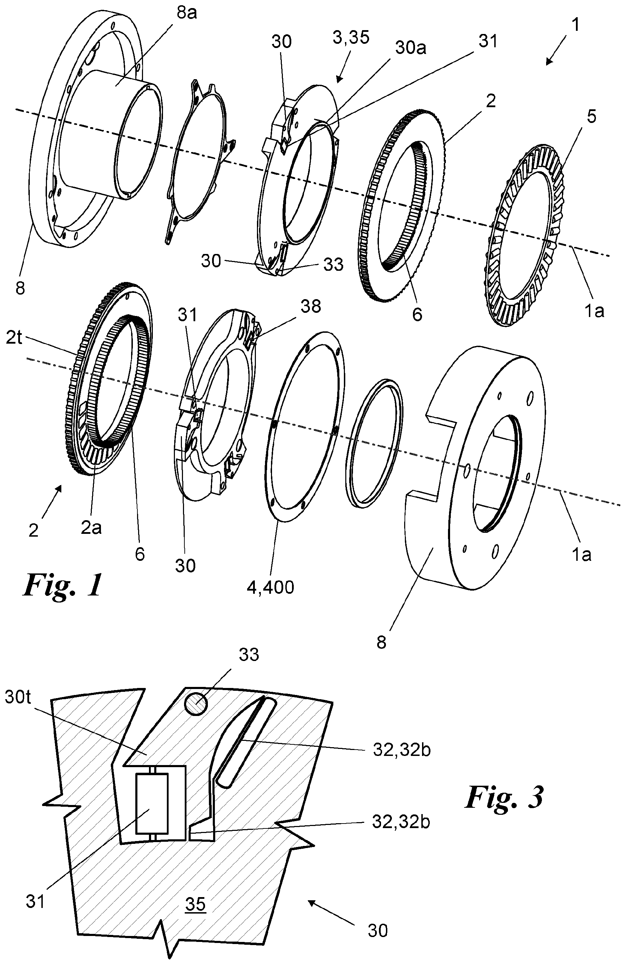

For example, as illustrated in the Fig. 3, the active portion 30 can be arranged in a radial position close to the edge end of an eccentric mass 2 and comprise a piezoelectric thrust element 31 having a prevalent extension in the radial direction and extending, following an electrical stress, along the same radial direction. The piezoelectric thrust element 31 is, in this case, suitably connected to a portion at the circumferential end of the active portion 30. Furthermore, in the illustrated example, there are two leaf springs which constitute the elastic return means 32 for each active portion 30: a first leaf spring **32a** preferably aligned on the joining radius of the center of the system 1a with the center of the support 33 described hereinafter. The elastic return means 32 also preferably comprise a second leaf spring **32b** preferably arranged so that its axis passes through the center of rotation of the first leaf spring 32a and furthermore partly radially and partly circumferentially.

Furthermore, a plurality of active portions 30 are preferably present, preferably three, arranged, preferably symmetrically, more preferably at 120°, along a circumference perpendicular to the central axis 1a.

Structurally, preferably, the said active portions 30 are connected to a motor element **35,** integral with the fixed portion 1b and constituting part of the same. Preferably, the active portions 30 are constrained to the motor element 35, preferably by means of the elastic return means 32 and the piezoelectric thrust element 31, more preferably all the active portions 30 arranged along the same circumference and constituting a balancing motor 3 for an eccentric mass 2.

Each motor element 35 is substantially, but not necessarily, structured as a ring and also preferably comprises an annular flange 30a. On the one hand, an eccentric mass 2 can be connected to said annular flange 35a, through said first rotational bearings 5. It is also pointed out that the device would function correctly even if said eccentric mass 2 were connected through said first rotational bearings 5 to the stator portion 1c.

The device 1 further comprises electrical connection means **38,** between the piezoelectric thrust elements 31 and an electrical power supply. Said connection means 38 are electric cables, metal discs or similar.

Furthermore, each active portion 30 comprises a support **33,** protruding in the direction of the central axis 1a and resting, in the direction of the central axis 1a, on an eccentric mass 2. The support 33 is preferably constituted by a pin and/or a hemispherical portion, preferably of metal, more preferably of hard metal, such as tungsten carbide, or ceramic or similar. It is preferably placed in proximity to the portion of the active portion 30 with a greater radial distance from the central axis.

Preferably, the support 33 is opposed to abutment ring **2t** preferably thin and preferably made of hard metal, tungsten carbide, or ceramic, or similar, integral with the eccentric mass 2. These elements have the advantage of reducing wear.

The balancing device 1 also comprises axial thrust means **4** capable of pressing the support 33 against the eccentric mass 2. Preferably they consist of a spring, preferably spiral or circular, with a center along the central axis. Preferably there is a single element which constitutes the thrust means 4 and is able to push both motors 3 in the direction of their own eccentric masses 2, locking them and allowing reciprocal rotation thanks to the second rotational bearings 6. In particular, the axial thrust means 4 include an elastic joint **40.** Said element also contributes to the elimination of the backlash at the inversion of the motion of the pressed part, which would have been introduced by any other type of mechanical constraint (e.g. spines). Clearly, the elimination of backlash and inversion is also guaranteed by the configuration of the engine itself and by the absence of transmission systems between the engine and the rotating elements 2.

Preferably, each engine element 35 is connected to an eccentric mass 2 exclusively by means of the supports 33 and the first rotational bearings 5.

The balancing device 1, as a whole, has preferably arranged in the direction of the central axis 1a, in the center the two eccentric masses 2, mutually separated by the second rotational bearings 6, at the sides of the two eccentric masses 2 the two balancing motors 3, composed of the motor elements and the connected active elements 30 with their own electrical connections 38, to the side of only one of the motors the element constituting the axial thrust means 4. The device 1 is also preferably closed by a casing **8,** part of the rotor portion 1b and preferably including a tubular portion **8a** on which all the items described. The casing 8 preferably has the task of making the rotor part 1b of the balancing device 1 watertight. The casing 8, preferably, constitutes a watertight protective shell and also houses the electronic and electromagnetic circuitry for the transmission of power and data bi-directional with the control unit placed upstream and part of the balancing apparatus 200. The apparatus 200 therefore comprises the said balancing device 1 and, preferably means for detecting the imbalance **201,** such as accelerometers known per se which can be inserted in the device 1 or not, electrical power supply means **202,** connected to said electrical connections 38 and to said piezoelectric thrust elements 31, control means **203,** suitable for receiving information, transmitting it and controlling the piezoelectric elements 31 and other elements. The apparatus 200 may further comprise sensor means suitable for sensing the contact between the rotating piece 100 and the workpiece, in particular when the former consists of a grinding wheel or similar tool.

The operation of the balancing device 1, and of the balancing apparatus 200, previously described in structural terms, is as follows.

Within it, a new process is defined for moving an eccentric mass 2, around a central axis 1a, to modify the center of mass of a rotating piece 100. In this process, the eccentric mass 2 is preferably moved by a balancing motor 3 of the piezoelectric type, preferably of the type described above. Furthermore, in this process the eccentric mass 2 is preferably moved by a balancing motor 3 of the stick-slip type, preferably of the type described above.

The process takes place preferably through the balancing device 1 previously described and, preferably through the balancing apparatus 200 previously described.

In detail, the balancing device 1 is integrally constrained, in particular through the fixed portion 1b and more particularly through the casing 8, to a shaft of the rotating piece 100, so that the central axis 1a substantially coincides with the axis of rotation 100a.

Initially, if the rotating piece is balanced, the two eccentric masses 2 are offset by 180°, so that the balancing device 1 is also balanced and also the whole of the two objects.

If an imbalance occurs in the rotating piece 100, the imbalance detection means 201 perceives it, measures it and sends it to the control means 203.

These control the electrical power supply means 202 and, through the electrical connections 38, the balancing motors of one or two eccentric masses.

In particular, an electrical impulse is sent to the piezoelectric element 31 which deforms, in particular it expands or contracts according to the direction of rotation of the mass 2, moving, according to the degree of freedom allowed by the elastic return means 32, the active portion 30.

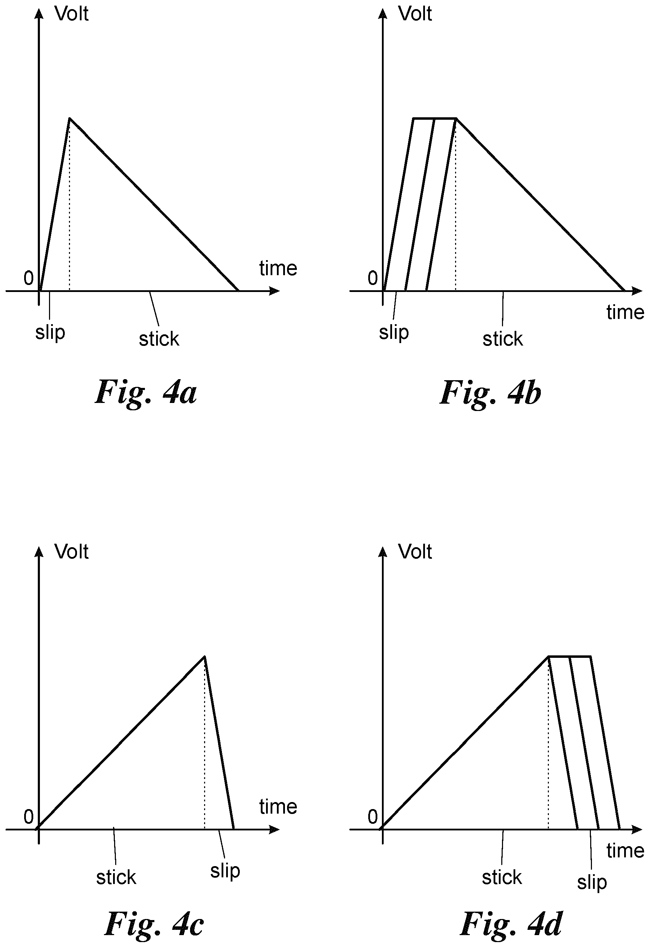

In particular, (Figs. 4a and 4b) in a first case, all the piezoelectric elements 31, part of the same balancing motor 30 and therefore preferably of the same motor element 35, are activated simultaneously, hence the electrical pulse arrives simultaneously to all the piezoelectric elements 31 connected to the motor element 35.

In a second case (Fig. 4c and 4d), on the other hand, the piezoelectric elements 31, part of the same balancing motor 30 and therefore preferably of the same element motor 35, are activated (Fig. 4a) or deactivated (Fig. 4b) in sequence, preferably one at a time. Therefore the electrical impulse, in the "slip" phase only, arrives in sequence and not simultaneously to all the piezoelectric elements 31 connected to the motor element 35, while in the "stick" phase the impulse is simultaneous. This second solution has the advantage of increasing the torque transferred during the slip phase.

Conveniently, the electrical impulse is given in such a way, and the piezoelectric is chosen in such a way that the acceleration and speed imposed on the active portion 30 overcomes the static friction between the supports 33 and the connected eccentric mass 2. In this phase, therefore, only the active portions 30 are moved, while the connected eccentric mass 2 and, obviously, the motor element 35, remain stationary. There is therefore the phenomenon of "slip" of the stick-slip mechanism described above.

At the end of this movement, the electrical impulse decreases in voltage or intensity or power, more slowly, and the piezoelectric returns to its original position preferably also under the action of the elastic return means 32.

The latter, thanks to the waveform of the power supply, is slower and the static friction between the supports 33 and the connected eccentric mass 2 is not exceeded. Consequently, there is the "stick" phase of the movement described and the active portions drag, in their return movement, the connected eccentric mass 2 making it rotate by a fraction of the circumference, for a linear even sub-micrometric movement, around the central axis 1a.

In detail, the piezoelectric material is preferably a piezoelectric ceramic, preferably of the "stack" type, fed with a suitable waveform (example Fig. 4) characterized in voltage and frequency. In particular, for the "slip" to occur, the piezoelectric must be fed with sufficient speed (increase or decrease for the two directions of rotation).

Similarly, for the "stick" to occur, the piezoelectric must be fed with adequate slowness (increase or decrease for the two directions of rotation).

The eccentric masses 2 are then rotated until the unbalance of the balancing device 1 is equal and opposite to the imbalance of the piece 100, in such a way as to balance it.

The balancing device 1 according to the invention achieves important advantages.

In fact, the balancing device is simple and robust, not including complex rotational motors and the like. It can therefore also be placed on board rotating elements that exceed tens of thousands of revolutions per minute.

For the same reasons it is very economical.

The device 1 itself is also very precise, since it can move the masses of micrometric portions.

The eccentric mass 2 are also locked in the absence of activation of the motors 3, without the need for braking devices.

A further advantage is given by the fact that the motor 3 is intrinsically resistant to the centrifugal force since it is designed with the following innovation. The lever **30t** is such as to allow the insertion of the active element 31 (piezoelectric example) in the radial direction. Therefore, the centrifugal force is an axial stress for it and damages it. The center of gravity of the element 30t is opposite to the piezoelectric 31 with respect to the axis joining the center of the pin 33, the center of rotation of the leaf spring 31b and the center of rotation 1a. This causes the centrifugal force to increase the preload on the piezoelectric 31. Otherwise, the mechanism would not work, since under the effect of the centrifugal force it would tend to open.

The invention is defined by the claims.

## Claims

1. A balancing device (1) for a rotating part (100),
- said rotating part (100) defining a rotation axis (100a),
- said balancing device (1) defining a central axis (1a) and being able to be bound to said rotating part (100) so that said central axis (1a) basically coincides with said rotation axis (100a), and comprising:
- at least one eccentric mass (2) that can be rotated about said central axis (1a) and that is not balanced in relation to said central axis (1a),
- at least one balancing motor (3), designed to rotate said eccentric mass (2), in relation to said rotating part (100) around said central axis (1a),
- a fixed portion (1b) integral, in use, with said rotating part (100),
and being **characterised in that** said balancing motor (3) comprises stick-slip motor means,
- said balancing motor (3) comprising at least one active portion (30), movable in relation to said fixed portion (1b) and connected to said fixed portion (1b) by at least one thrust element (31), said thrust element (31) being designed to move, by means of its active deformation following electrical impulses, at least part of said active portion (30) in the circumferential direction in relation to said central axis (1a).
- said active portion (30) comprising a support (33), protruding in the direction of said central axis (1a), and said support (33) resting, in the direction of said central axis (1a), on said eccentric mass (2),
- and said balancing device (1) comprises axial thrust means (4) designed to press said support (33) against said eccentric mass (2).

2. The balancing device (1) according to claim 1, wherein said balancing motor (3) is of the piezoelectric type.

3. The balancing device (1) according to the previous claim, wherein said active portion (30) is connected to said fixed portion (1a) by means of elastic return means (32), designed to bring, in the absence of other external stimuli, said active portion (30) to an initial position following movement by said thrust element (31).

4. The balancing device (1) according to the previous claim, wherein said thrust element (31) is a piezoelectric element.

5. The balancing device (1) according to any of the previous claims, wherein there are a plurality of active portions (30) arranged along a circumference perpendicular to said central axis (1a).

6. The balancing device (1) according to any of the previous claims, wherein a plurality of said active portions (30) are bound to a motor element (35), alongside said eccentric mass (2) and wherein said motor element (35) and said eccentric mass (2) are connected to each other by means of said supports (33) and by means of first rotational bearings (5) around said central axis (1a).

7. The balancing device (1) according to any of the previous claims, wherein there are two said eccentric masses (2) and two said balancing motors (3), one for each of said eccentric masses (2).

8. The balancing device (1) according to the previous claim, wherein said eccentric masses (2) are opposed and connected by means of second rotational bearings (6) around said central axis (1a).

9. A procedure for moving an eccentric mass (2), around a central axis (1a), to change the center of mass of a rotating part (100), carried out on a balancing device (1) according to any of previous claims, said eccentric mass (2) being moved by means of a stick-slip balancing motor (3).

10. The procedure according to the previous claim, wherein said movement takes place by means of a piezoelectric mechanism.

11. The procedure according to the previous claim, wherein said thrust elements (31), which are part of the same balancing motor (3), are actively deformed simultaneously.

12. The procedure according to claim 10 or 11, wherein said thrust elements (31), which are part of the same balancing motor (3), are actively deformed in sequence.

## Patentansprüche

1. Auswuchtvorrichtung (1) für ein Drehteil (100),
- wobei das Drehteil (100) eine Rotationsachse (100a) definiert,
- wobei die Auswuchtvorrichtung (1) eine Zentralachse (1a) definiert und an das Drehteil (100) gebunden werden kann, so dass die Zentralachse (1a) im Wesentlichen mit der Rotationsachse (100a) zusammenfällt, und umfassend:
- mindestens eine exzentrische Masse (2), die um die Zentralachse (1a) drehbar ist und die in Bezug auf die Zentralachse (1a) nicht ausgewucht ist,
- mindestens einen Auswuchtmotor (3), der ausgelegt ist, die exzentrische Masse (2) in Bezug auf das Drehteil (100) um die Zentralachse (1a) zu drehen,
- einen festen Abschnitt (1b), der im Gebrauch mit dem Drehteil (100) integriert ist, und **dadurch gekennzeichnet, dass** der Auswuchtmotor (3) Haftgleit-Motormittel umfasst,
- wobei der Auswuchtmotor (3) mindestens einen aktiven Abschnitt (30) umfasst, der in Bezug auf den festen Abschnitt (1b) beweglich ist und der mit dem festen Abschnitt (1b) durch mindestens ein Drückelement (31) verbunden ist, wobei das Drückelement (31) ausgelegt ist, durch seine aktive Verformung infolge elektrischer Impulse mindestens einen Teil des aktiven Abschnitts (30) in Umfangsrichtung in Bezug auf die Zentralachse (1a) zu bewegen.
- wobei der aktive Abschnitt (30) eine Halterung (33) umfasst, die sich in Richtung der Zentralachse (1a) erstreckt, und wobei die Halterung (33) in Richtung der Zentralachse (1a) auf der exzentrischen Masse (2) aufliegt,
- und wobei die Auswuchtvorrichtung (1) axiale Drückmittel (4) umfasst, die ausgelegt sind, die Halterung (33) gegen die exzentrische Masse (2) zu drücken.

2. Auswuchtvorrichtung (1) nach Anspruch 1, wobei der Auswuchtmotor (3) des piezoelektrischen Typs ist.

3. Auswuchtvorrichtung (1) nach dem vorhergehenden Anspruch, wobei der aktive Abschnitt (30) mit dem festen Abschnitt (1a) durch elastische Rücklaufsmittel (32) verbunden ist, die ausgelegt sind, in Abwesenheit anderer äußerer Anreize, den aktiven Abschnitt (30) infolge einer Bewegung durch das Drückelement (31) in eine Ausgangsposition zurückzubringen.

4. Auswuchtvorrichtung (1) nach dem vorhergehenden Anspruch, wobei das Drückelement (31) ein piezoelektrisches Element ist.

5. Auswuchtvorrichtung (1) nach einem der vorhergehenden Ansprüche, wobei eine Mehrzahl von aktiven Abschnitten (30) vorhanden ist, die entlang eines zur Zentralachse (1a) senkrechten Umfangs angeordnet sind.

6. Auswuchtvorrichtung (1) nach einem der vorhergehenden Ansprüche, wobei eine Mehrzahl von aktiven Abschnitten (30) mit einem Motorelement (35) gebunden ist, das sich neben der exzentrischen Masse (2) befindet, und wobei das Motorelement (35) und die exzentrische Masse (2) durch die Halterungen (33) und durch erste Drehlager (5) um die Zentralachse (1a) miteinander verbunden sind.

7. Auswuchtvorrichtung (1) nach einem der vorhergehenden Ansprüche, wobei zwei exzentrische Massen (2) und zwei Auswuchtmotoren (3), einen für jede exzentrische Masse (2), vorhanden sind.

8. Auswuchtvorrichtung (1) nach dem vorhergehenden Anspruch, wobei die exzentrischen Massen (2) einander gegenüberliegen und durch zweite Drehlager (6) um die Zentralachse (1a) verbunden sind.

9. Verfahren zum Bewegen einer exzentrischen Masse (2) um eine Zentralachse (1a), um den Schwerpunkt eines Drehteils (100) zu verändern, wobei das Verfahren an einer Auswuchtvorrichtung (1) nach einem der vorhergehenden Ansprüche durchgeführt wird, wobei die exzentrische Masse (2) durch einen Haftgleit-Auswuchtmotor (3) bewegt wird.

10. Verfahren nach dem vorhergehenden Anspruch, wobei die Bewegung durch einen piezoelektrischen Mechanismus erfolgt.

11. Verfahren nach dem vorhergehenden Anspruch, wobei die Drückelemente (31), die Teil desselben Auswuchtmotors (3) sind, gleichzeitig aktiv verformt werden.

12. Verfahren nach Anspruch 10 oder 11, wobei die Drückelemente (31), die Teil desselben Auswuchtmotors (3) sind, nacheinander aktiv verformt werden.

## Revendications

1. Un dispositif d'équilibrage (1) pour une pièce rotative (100),
- ladite pièce rotative (100) définissant un axe de rotation (100a),
- ledit dispositif d'équilibrage (1) définissant un axe central (1a) et étant capable d'être lié à ladite pièce rotative (100) de sorte que ledit axe central (1a) coïncide essentiellement avec ledit axe de rotation (100a), et comprenant:
- au moins une masse excentrique (2) qui peut tourner autour dudit axe central (1a) et qui n'est pas équilibrée par rapport audit axe central (1a),
- au moins un moteur d'équilibrage (3), conçu pour faire tourner ladite masse excentrique (2) par rapport à ladite pièce rotative (100) autour dudit axe central (1a),
- une portion fixe (1b) solidaire, en utilisation, avec ladite pièce rotative (100), **et caractérisé en ce que** ledit moteur d'équilibrage (3) comprend des moyens de moteur de type stick-slip,
- ledit moteur d'équilibrage (3) comprenant au moins une portion active (30), mobile par rapport à ladite portion fixe (1b) et reliée à ladite portion fixe (1b) par au moins un élément de poussée (31), ledit élément de poussée (31) étant conçu pour déplacer, par sa déformation active suite à des impulsions électriques, au moins une partie de ladite portion active (30) dans la direction circonférentielle par rapport à l'axe central (1a).
- ladite portion active (30) comprenant un support (33) s'étendant dans la direction dudit axe central (1a), et ledit support (33) reposant, dans la direction dudit axe central (1a), sur ladite masse excentrique (2),
- et ledit dispositif d'équilibrage (1) comprend des moyens de poussée axiale (4) conçus pour appuyer ledit support (33) contre ladite masse excentrique (2).

2. Le dispositif d'équilibrage (1) selon la revendication 1, dans lequel ledit moteur d'équilibrage (3) est de type piézoélectrique.

3. Le dispositif d'équilibrage (1) selon la revendication précédente, dans lequel ladite portion active (30) est reliée à ladite portion fixe (1a) par des moyens de rappel élastique (32), conçus pour ramener, en l'absence d'autres stimuli externes, ladite portion active (30) à une position initiale après un déplacement par ledit élément de poussée (31).

4. Le dispositif d'équilibrage (1) selon la revendication précédente, dans lequel ledit élément de poussée (31) est un élément piézoélectrique.

5. Le dispositif d'équilibrage (1) selon l'une des revendications précédentes, dans lequel il existe une pluralité de portions actives (30) disposées le long d'une circonférence perpendiculaire audit axe central (1a).

6. Le dispositif d'équilibrage (1) selon l'une des revendications précédentes, dans lequel une pluralité de dites portions actives (30) sont reliées à un élément moteur (35), adjacent à ladite masse excentrique (2), et dans lequel ledit élément moteur (35) et ladite masse excentrique (2) sont reliés l'un à l'autre au moyen desdits supports (33) et au moyen de premiers roulements rotatifs (5) autour dudit axe central (1a).

7. Le dispositif d'équilibrage (1) selon l'une des revendications précédentes, dans lequel il existe deux dites masses excentriques (2) et deux dits moteurs d'équilibrage (3), un pour chacune desdites masses excentriques (2).

8. Le dispositif d'équilibrage (1) selon la revendication précédente, dans lequel lesdites masses excentriques (2) sont opposées et reliées par des seconds roulements rotatifs (6) autour dudit axe central (1a).

9. Une procédure pour déplacer une masse excentrique (2), autour d'un axe central (1a), pour modifier le centre de masse d'une pièce rotative (100), réalisée sur un dispositif d'équilibrage (1) selon l'une des revendications précédentes, ladite masse excentrique (2) étant déplacée au moyen d'un moteur d'équilibrage de type stick-slip (3).

10. La procédure selon la revendication précédente, dans laquelle ledit déplacement s'effectue au moyen d'un mécanisme piézoélectrique.

11. La procédure selon la revendication précédente, dans laquelle lesdits éléments de poussée (31), qui font partie du même moteur d'équilibrage (3), sont activement déformés simultanément.

12. La procédure selon la revendication 10 ou 11, dans laquelle lesdits éléments de poussée (31), qui font partie du même moteur d'équilibrage (3), sont activement déformés en séquencee.
